# EUROPÄISCHE PATENTSCHRIFT

(11) **EP 2 569 522 B1**
(45) Veröffentlichungstag und Bekanntmachung des Hinweises auf die Patenterteilung: **10.12.2014**
(21) Anmeldenummer: 11716397.2
(22) Anmeldetag: 18.04.2011
(51) Int. Cl.: F01N 3/20

(54) **VORRICHTUNG ZUR REDUKTION VON SCHADSTOFFEN IM ABGASSTROM EINES VERBRENNUNGSMOTORS**
DEVICE FOR REDUCING POLLUTANTS IN THE EXHAUST GAS FLOW OF AN INTERNAL COMBUSTION ENGINE
DISPOSITIF DE RÉDUCTION DE SUBSTANCES POLLUANTES DANS LE FLUX DE GAZ D'ÉCHAPPEMENT D'UN MOTEUR À COMBUSTION INTERNE

(30) Priorität: 11.05.2010 DE 102010028863
(43) Veröffentlichungstag der Anmeldung: 20.03.2013
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2011/056084
(87) Internationale Veröffentlichungsnummer: WO 2011/141278

(56) Entgegenhaltungen:
- WO-A1-02/24312
- WO-A1-03/027454
- WO-A1-2007/141312
- FR-A1- 2 879 239

## Beschreibung

### Stand der Technik

Bei Kraftfahrzeugen mit Verbrennungsmotoren müssen aufgrund der zunehmend strengeren Abgasgrenzwerte unter anderem Luftschadstoffe, wie zum Beispiel Stickoxide (NOx), im Abgasstrom reduziert werden. Ein weit verbreitetes Verfahren das hierbei zur Anwendung kommt, ist die katalytische Reduktion, das heißt das s.g. SCR-Verfahren ("Selective Catalytic Reduction"). Hierbei wird während des Betriebs des Verbrennungsmotors ein flüssiges Reduktionsmittel mithilfe einer Pumpe aus einem Vorratsbehälter zu einem Dosiermodul im Bereich eines Katalysators am Abgasrohr gefördert. Als Reduktionsmittel findet in der Regel eine Harnstoff-Wasser-Lösung mit dem Markennamen "AdBlue®" Verwendung. Zu berücksichtigen ist, dass diese Harnstoff-Wasser-Lösung bei einer Temperatur von -11 °C gefriert und sich oberhalb von 60 °C thermisch zersetzt, so dass insbesondere für den Winterbetrieb bei tiefen Temperaturen Heizeinrichtungen vorgesehen werden müssen.
Um die notwendige Frostsicherheit des Abgasreinigungssystems bei tiefen Betriebstemperaturen im Bereich von -11 °C und darunter sicher zu stellen, wird nach dem Abstellen des Verbrennungsmotors das Reduktionsmittel vollständig aus dem Dosiermodul, den Leitungen sowie der Fördereinrichtung in den Vorratstank zurückgesaugt. Hierbei strömt in die vom Reduktionsmittel beim Abpumpen freiwerdenden Hohlräume in den Komponenten Luft und/oder Restabgas.

Problematisch bei dieser Rücksaugprozedur ist vor allem eine räumliche Anordnung der Pumpe unterhalb des Flüssigkeitsniveaus im Vorratstank, die jedoch aufgrund von speziellen konstruktiven Erfordernissen notwendig sein kann. Denn zum einen schließen Einlass- und Auslassventile des Fördermoduls nicht absolut dicht und zum anderen ist das Dosiermodul am Abgasstrang nicht hermetisch gasdicht, so dass das komplette System, insbesondere bei längeren Stillstandszeiten, nach dem Abschluss des Rücksaugprozesses langsam wieder mit der Reduktionsflüssigkeit volllaufen kann. Dies gilt umso mehr, als dass die Düse zum Einspritzen des Reduktionsmittels meist im Bereich der tiefsten Stelle des Systems, das heißt unmittelbar am Abgasrohr bzw. am Katalysator positioniert ist. Sind die Pumpe und die Düse einschließlich der Verbindungsleitungen nicht eisdruckfest - das heißt berstsicher bei abkühlungsbedingter Volumenausdehnung des Reduktionsmittels - ausgelegt, so können sie beim Volumenzuwachs während des Phasenübergangs des Reduktionsmittels von flüssig zu fest beschädigt werden, wodurch die Funktion des Abgasreinigungssystems nicht mehr gegeben ist.

Die aus dem Stand der Technik bekannten Lösungen begegnen diesem Problem bislang dadurch, dass die Pumpe stets oberhalb des Flüssigkeitsspiegels im Vorratstank positioniert wird, so dass ein Rückfluss des Reduktionsmittels aufgrund der Schwerkraft ausgeschlossen ist. Durch diese konstruktive Randbedingung wird jedoch der zur Integration des Abgasnachbehandlungssystems im Kraftfahrzeug nutzbare Einbauraum erheblich eingeschränkt. Alternativ kann zwischen der Förderpumpe und der Ansaugstelle ein Siphon vorgesehen werden, dessen Krümmer oberhalb des Flüssigkeitsspiegels des Reduktionsmittels liegt. Die zweite Lösungsvariante erlaubt hinsichtlich der räumlichen Anordnung seiner Bestandteile eine höhere Flexibilität, hat jedoch den Nachteil, dass wegen des Siphons und der deswegen längeren Leitungsführungen zur Sicherstellung des Winterbetriebs eine größere Leitungslänge beheizt werden muss, wodurch sich der Energieaufwand für die Heizung und zugleich auch der Platzbedarf für die Leitungen erhöht.

Aus der DE 10 2006 044 246 A1 ist ein System zur Nachbehandlung eines Abgases eines Verbrennungsmotors mit einem Reduktionsmittel bekannt, wobei das Reduktionsmittel mit Hilfe einer hydraulisch angetriebenen Membranpumpe von einem Vorratsbehälter bis zu einer an einem Katalysator angeordneten Düse gefördert wird. Hierbei baut die Membranpumpe einen für den Einspritzvorgang des Reduktionsmittels bereits ausreichenden Arbeitsdruck auf. Das System offenbart jedoch keine Mittel zum Zurücksaugen des Reduktionsmittels aus der Leitungsführung nach dem Abstellen des Verbrennungsmotors und zeigt darüber hinaus auch keine Vorkehrungen, die eine hermetische Abdichtung gegen das Zurückfließen des Reduktionsmittels nach dem Absaugprozess sicher stellen.

Aus der WO 2007/141312 ist ein System zur Speicherung eines flüssigen Additivs bekannt, welches eine Pumpe im Bodenbereich eine Behältnisses aufweist.

Aufgabe der Erfindung ist es daher, eine Vorrichtung für ein Reduktionsmittel zur Verminderung von Luftschadstoffen, insbesondere von Stickoxiden (NOx), im Abgas eines Verbrennungsmotors zu schaffen, bei dem nach dem Abstellen des Motors und der Beendigung des Rücksaugvorgangs der Reduktionsflüssigkeit ein Rückfluss des Reduktionsmittels aus dem Vorratstank in das System sicher ausgeschlossen ist.

### Offenbarung der Erfindung

Es wird eine Vorrichtung zur Reduktion von Stickoxiden in einem Abgasstrom eines Verbrennungsmotors vorgeschlagen, die unter anderem einen Vorratstank mit dem Reduktionsmittel, ein Dosiermodul, insbesondere eine Düse, zum Einsprühen des Reduktionsmittels in den Abgasstrom sowie eine Pumpe zur Förderung des Reduktionsmittels von einer Ansaugstelle im Vorratstank über Leitungen bis hin zum Dosiermodul umfasst.

Erfindungsgemäß ist die Pumpe unterhalb des Niveaus des Reduktionsmittels im Vorratstank angeordnet und eine Rückflusssperre verhindert, dass das Reduktionsmittel nach dem Zurücksaugen aus dem Abgasnachbehandlungssystem nach dem Abstellen des Verbrennungsmotors, insbesondere aufgrund der Wirkung der Schwerkraft sowie nicht vollständig schließender Ventile in der Pumpe, in unerwünschter Weise wieder bis zur Düse zurückfließt.

Dabei wird die Rückflusssperre beispielsweise mit einer Dichtkante, die in einem Ruhezustand, das heißt in einem stromlosen Zustand der zur Förderung des Reduktionsmittels eingesetzten Pumpe, mit einer definiert hohen mechanischen Anpresskraft gegen einen gummierten Anschlag gepresst wird, technisch umgesetzt. Hierdurch wird eine zuverlässige, hermetische Abdichtung zwischen dem Vorratstank mit dem Reduktionsmittel und dem Einlass der Pumpe bewirkt, die das unkontrollierte Zurückfließen des Reduktionsmittels bei abgestelltem Verbrennungsmotor verhindert. Ein besonderer Vorteil dieser Ausgestaltung liegt darin, dass die Rückflusssperre unmittelbar in die Pumpe integriert ist, so dass keine weiteren Komponenten erforderlich sind. Ein externes, gegebenenfalls zu beheizendes Absperrventil oder ein Filter mit Rückflusssperrenfunktion, können entfallen, wodurch der Kosten- und Herstellungsaufwand der Vorrichtung signifikant verringert wird.

### Kurze Beschreibung der Zeichnungen

Anhand der Zeichnung soll die Erfindung nachstehend näher erläutert werden.

Es zeigt:
- Figur 1: eine Vorrichtung zur Abgasbehandlung nach Maßgabe des Standes der Technik;
- Figur 2: eine Möglichkeit der Realisierung einer Rückflusssperre;
- Figur 3: eine Detailansicht des bei der Realisierung gem. Figur 2 verwendeten Filters, und
- Figur 4: eine schematische Schnittdarstellung der bei einer erfindungsgemäßen Ausführungsvariante zum Einsatz kommenden Pumpe mit integrierter Rückflusssperre.

### Ausführungsformen der Erfindung

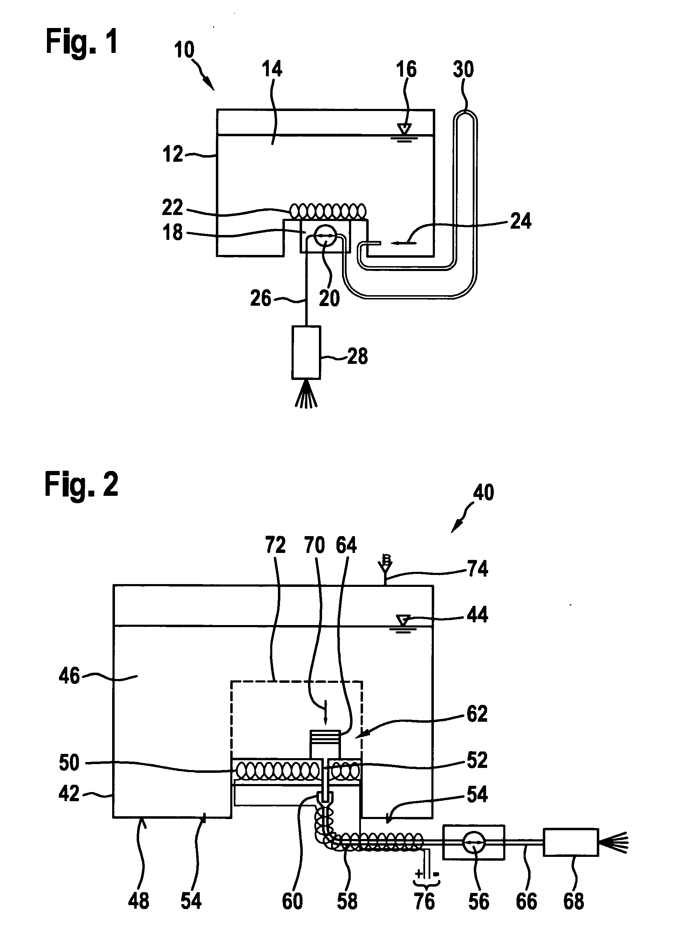

Die Figur 1 zeigt eine aus dem Stand der Technik bekannte Vorrichtung zur Abgasbehandlung eines Verbrennungsmotors, insbesondere eines Dieselmotors.
Die Vorrichtung 10 umfasst unter anderem einen Vorratstank 12, der mit einem Reduktionsmittel 14, zum Beispiel einer Harnstoff-Wasser-Lösung, zur chemischen Reduktion der im Abgasstrom eines Verbrennungsmotors enthaltenen Stickoxide gefüllt ist. Der Vorratstank 12 wird üblicherweise bis zu einem Reduktionsmitteispiegel 16 befüllt und enthält dann zwischen 10 l und 20 I des Reduktionsmittels 14. Unterseitig ist in den Vorratstank 12 ein Funktionsmodul 18 eingeschweißt oder auf andere Weise befestigt. Dieses umfasst unter anderem eine Pumpe 20 und eine elektrisch ausgeführte Heizeinrichtung 22. Die Pumpe 20 kann das Reduktionsmittel 14 sowohl aus dem Vorratstank 12 bis zur Düse 28, als auch in umgekehrter Richtung von der Düse 28 wieder in

den Vorratstank 12 fördern. Darüber hinaus umfasst das Funktionsmodul 18 eine Vielzahl von Messsensoren, wie zum Beispiel Temperatursensoren, Drucksensoren, Sensoren zur Durchflussmengenmessung, Füllstandsmesser, Lagesensoren sowie eine Steuer- und/oder Regeleinrichtung. Mittels der Pumpe 20 wird das Reduktionsmittel 14 während des Betriebs des Verbrennungsmotors ausgehend von einer Ansaugstelle 24, die vorzugsweise im Bereich des tiefsten Punktes des Vorratstanks 12, dem so genannten "Pumpensumpf" angeordnet ist, über eine Leitung 26 bis zur Düse 28 gefördert. Die Düse 28 erlaubt das fein verteilte, dispergierte Einspritzen des Reduktionsmittels 14 in den Katalysator des in der Figur 1 der besseren zeichnerischen Übersicht halber nicht dargestellten Abgasstrangs des Verbrennungsmotors. Im Allgemeinen hat die Düse 28 zugleich eine Ventilfunktion, das heißt das Einspritzen des Reduktionsmittels 14 erfolgt erst ab dem Erreichen eines definierten Mindestdrucks. Nach dem Abstellen des Verbrennungsmotors wird das Reduktionsmittel 14 zunächst mittels der dann im Umkehrbetrieb laufenden Pumpe 20 vollständig aus der Düse 28, der Leitung 26 sowie einem Siphon 30 bis in den Vorratstank 12 zurückgesaugt. Hierbei füllen sich die genannten Bestandteile des Systems mit Restmengen des Gases aus dem Abgassystem des Verbrennungsmotors.

Das unkontrollierte Zurückfließen des Reduktionsmittels 14, insbesondere im Fall von längeren Stillstandszeiten des Verbrennungsmotors, wird durch den Siphon 30 verhindert. Zwar erlaubt die vorstehend erläuterte Vorrichtung eine Anordnung der Pumpe 20 des Abgasnachbehandlungssystems wahlweise auch unterhalb des Reduktionsmittelspiegels 16 im Vorratstank 12, doch verlängert sich infolge des notwendigen Siphons 30 die vorzusehende Leitungslänge, die zur Sicherstellung der Funktionsfähigkeit der Vorrichtung 10 bei tiefen Temperaturen beheizt werden muss.

Die Figur 2 illustriert eine Möglichkeit der Realisierung einer Rückflusssperre. Eine Vorrichtung 40 umfasst unter anderem einen Vorratstank 42, der bis zu einem Reduktionsmittelspiegel 44 mit einem Reduktionsmittel 46 befüllt ist. Bei dem Reduktionsmittel 46 handelt es sich bevorzugt um eine Harnstoff-Wasser-Lösung, mittels der eine effiziente Reduktion von Stickoxiden (NOx) im Abgas eines Verbrennungsmotors erfolgt, wobei das Reduktionsmittel durch eine Düse in einen vom Abgasstrom durchströmten Katalysator feinverteilt eingespritzt wird. An einer Unterseite 48 des Vorratstanks 42, im Bereich einer nicht bezeichneten Erhöhung, befindet sich eine elektrische (Widerstands-) Heizeinrichtung 50 mit einer Durchleitung 52 für das Reduktionsmittel 46. Die Heizeinrichtung 50 ist durch eine Schweißnaht 54 mit der Unterseite 48 des Vorratstanks 42 verbunden. Weiterhin ist eine Pumpe 56 vorgesehen, die über eine Leitung 58 an die Durchleitung 52 angeschlossen ist. Die Leitung 58 kann beispielsweise als flexible Schlauchleitung ausgestaltet sein und mit einer Schelle 60 an der Durchleitung 52 befestigt sein. Im Bereich einer Ansaugstelle 62 befindet sich die bei dieser Variante als Filter 64 ausgebildete Rückflusssperre. Die Pumpe 56 ist über eine weitere Leitung 66 mit der Düse 68 verbunden, mittels der das Reduktionsmittel 46 fein zerstäubt in einen in Figur 2 nicht dargestellten Abgasstrang eines Verbrennungsmotors eingedüst wird. Die Düse 68 hat neben ihrer primären Zerstäubungsfunktion auch eine Ventilfunktion, das heißt das Einspritzen des Reduktionsmittels 46 erfolgt erst nach dem Überschreiten eines vorgegebenen Mindestdrucks. Wie der Darstellung der Figur 2 entnehmbar ist, kann mittels der Heizeinrichtung 50 sowohl der Vorratstank 42 als auch die zur Pumpe 56 führende Leitung 58 elektrisch beheizt werden.

Die Pumpe 56 ist - wie durch den kleinen schwarzen Doppelpfeil im Pumpensymbol angedeutet - derart ausgebildet, dass sie das Reduktionsmittel 46 sowohl aus dem Vorratstank 42 in einer (Haupt-)Förderrichtung zur Düse 68 als auch in einer umgekehrten Rücksaugrichtung von der Düse 68 wieder bis zurück in den Vorratstank 42 zu fördern vermag.

Ferner verfügt die Vorrichtung über eine Vielzahl von der besseren zeichnerischen Übersicht halber nicht dargestellten Sensoren, zum Beispiel mindestens einen Drucksensor, einen Temperatursensor, einen Füllstandssensor sowie gegebenenfalls einen Sensor zur exakten Durchflussmengenmessung, um die für die Vorrichtung 40 funktionsrelevanten physikalischen Parameter zur Gewährleistung einer präzise dosierten Einspritzmenge des Reduktionsmittels 46 zu erfassen, die zudem dem aktuellen Betriebszustand des Verbrennungsmotors optimal angepasst sind, um insbesondere den Verbrauch des Reduktionsmittels 46 zu optimieren. Ferner ist eine gleichfalls nicht dargestellte Steuer- und/oder Regeleinrichtung zur Kontrolle sämtlicher Betriebsabläufe innerhalb der Vorrichtung 40 vorgesehen, an der unter anderem die Sensoren, die Pumpe 56 sowie die Heizeinrichtung 50 angeschlossen sind. Beispielsweise kann die Heizeinrichtung 50 mittels der Steuer- und/oder Regeleinrichtung automatisiert eingeschaltet werden, wenn ein Temperatursensor eine Unterschreitung bzw. das Erreichen der Gefriertemperatur von -11 °C des Reduktionsmittels 46 signalisiert, der Verbrennungsmotor abgestellt ist und das Rücksaugen noch nicht erfolgt ist.

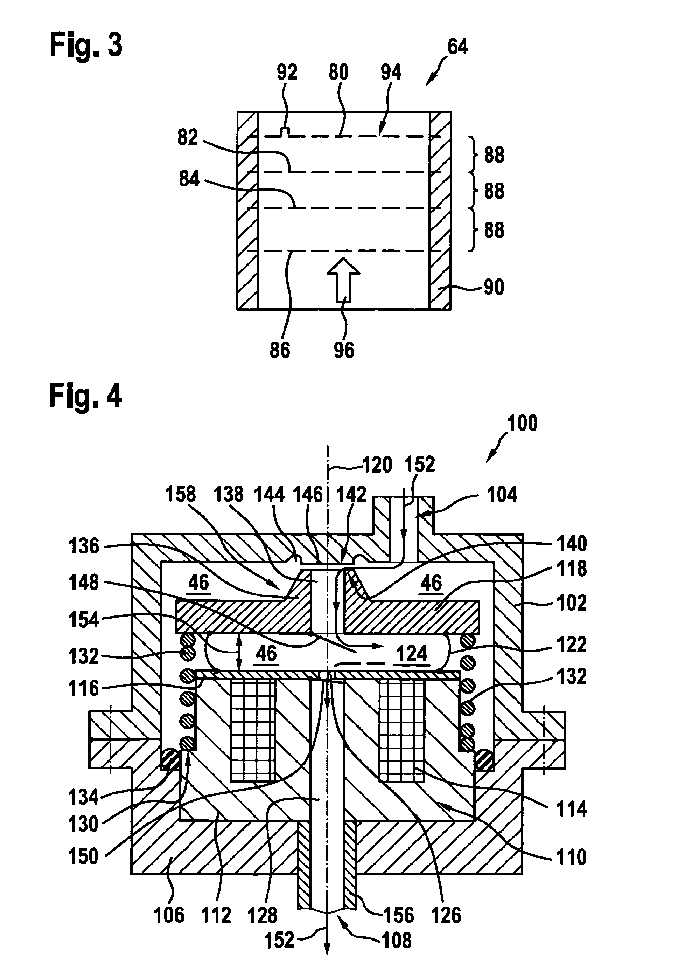

Der Filter 64 verhindert bei abgestelltem Verbrennungsmotor aufgrund seiner speziellen Mikrostruktur das Zurückfließen des Reduktionsmittels 46 aus dem Vorratstank 4, erlaubt jedoch im Betrieb des Verbrennungsmotors das ungehinderte Durchströmen des Reduktionsmittels 46 in Richtung des schwarzen Pfeils 70 durch die Durchleitung 52. Hinsichtlich der weiteren konstruktiven Einzelheiten des Aufbaus des Filters 64 und dessen Funktionsweise sei auf die Beschreibung der Figur 3 verwiesen.
Dem Filter 64 ist ein (Grob-)Reinigungsfilter 72 vorgeschaltet, um eine Verstopfung bzw. Kontamination der Vorrichtung 40 mit Fremdkörpern, die im Reduktionsmittel 46 enthalten sein können, zu verhindern. Darüber hinaus verfügt der Vorratstank 42 über ein oberseitig angeordnetes Entlüftungsventil 74. Die elektrische Heizeinrichtung 50 wird über einen elektrischen (Steck-)Anschluss 76 mit Strom versorgt.

Die Rückflusssperre ist also mit einem der Ansaugleitung der Pumpe vorgeschalteten Filter realisiert, der mit mindestens zwei hintereinander angeordneten, engmaschigen Kunststoffsieben gebildet ist. Aufgrund der Mikrostruktur der Siebe setzen sich während des Zurücksaugens des Reduktionsmittels feine Abgas- und Luftblasen in den Siebmaschen fest. Hierdurch erlangt das gasgefüllte Sieb hydrophobe Eigenschaften, während das Reduktionsmittel aufgrund seines Wassergehaltes hydrophil ist. Die Hydrophobie des Siebes verhindert somit zuverlässig das Zurückfließen nach dem Abstellen des Motors, da der relativ geringe statische Druck des Reduktionsmittels nicht ausreicht, um die Wasser abstoßende Wirkung der luft- und abgasgefüllten Siebe zu überwinden. Wird der Verbrennungsmotor wieder in Betrieb gesetzt, erzeugt die zur Förderung eingesetzte Pumpe jedoch im Bereich des Filters einen Unterdruck, der zur Überwindung der von den Filtersieben bewirkten Abstoßungskräfte ausreicht und das Reduktionsmittel kann wieder ungehindert den Filter durchströmen.

Die Figur 3 illustriert eine mögliche Ausgestaltung des Filters 64 nach Maßgabe der Figur 2.

Der Filter 64 umfasst vier hintereinander geschaltete Siebe 80 bis 86, die jeweils in einem Abstand 88 zwischen 1 mm und 5 mm in einem Gehäuse 90 aufgenommen sind. Eine Maschenweite 92 der repräsentativ für alle Übrigen mit einer Bezugsziffer versehenen Ausnehmung 94 in den Sieben 80 bis 86 beträgt bevorzugt jeweils zwischen 10 µm und 50 µm. Es ist nicht notwendig den Abstand 88 zwischen den Sieben 80,82, wie in Figur 3 gezeigt, für alle weiteren Siebe konstant zu halten. Ferner ist es möglich, die Maschenweite in den Sieben 80 bis 86 jeweils unterschiedlich groß zu wählen. Die Siebe 80 bis 86 sind vorzugsweise aus einem thermoplastischen Kunststoffmaterial, zum Beispiel mit Polyamid (PA) hergestellt. Andere Kunststoffmaterialien, wie beispielsweise Polyethylen (PE) oder Polytetrafluorethylen (PTFE) sind gleichfalls für die Herstellung der Siebe einsetzbar.

Beim Rücksaugen des Reduktionsmittels durch den Filter 64 in Richtung des großen weißen Pfeils 96 mittels der dann in Rücksaugrichtung betriebenen Pumpe (vgl. Fig. 2) gelangt das hierbei mit angesaugte Restabgas bzw. die Luft aus dem nicht dargestellten Abgasstrang zwischen die Siebe 80 bis 86 und damit auch in die Ausnehmungen 94. Die sich bildenden, eingeschlossenen Luftblasen verschließen aufgrund der ihnen eigenen Oberflächenspannung die Ausnehmungen in den Sieben 80 bis 86, so dass der Filter 64 wasserabweisend, das heißt hydrophob wird. Somit kann das wasserhaltige Reduktionsmittel 46 nach dem Abstellen des Verbrennungsmotors aufgrund des ihm innewohnenden, lediglich geringen statischen Drucks den vollständig mit Gas gefüllten, hydrophoben Filter 64 nicht mehr entgegen der Richtung des Pfeils 96 passieren.
Hierdurch wird das langsame "Einsickern" des Reduktionsmittels 46 in die Pumpe 56 einschließlich der Leitungen 58,66 sowie der Düse 68, insbesondere während längerer Stillstandszeiten des Verbrennungsmotors, zuverlässig verhindert und die hiermit verbundenen unerwünschten Folgeerscheinungen vermieden (vgl. Figur 2). Wird der Verbrennungsmotor wieder in Betrieb gesetzt, so saugt die Pumpe 56 das Reduktionsmittel 46 entgegen der Richtung des Pfeils 96 durch den Filter 64 hindurch, wodurch zugleich das Gas bzw. die Abgasrestmengen aus dem Filter 64 ausgetrieben werden. Durch das Absaugen des Gases wird der Filter 64 wieder hydrophil und lässt das Reduktionsmittel ungehindert passieren.

Das langsame "Einsickern" des Reduktionsmittels 46 in das Abgasbehandlungssystems ist vor allem deswegen problematisch, da es zum einen bei tiefen Temperaturen zum Gefrieren des Reduktionsmittels und hiermit verbundenen Folgebeschädigungen im Falle einer nicht 100%-igen Eisdruckfestigkeit des Systems kommt und zum anderen langsam aber stetig im Bereich der Düse 68 heraus tröpfelndes Reduktionsmittel 46 kristallisiert. Durch die den Wartungsaufwand erhöhende Kristallbildung wird zumindest der Austritt des Reduktionsmittels 46 behindert und die Zerstäubungswirkung, das heißt die Dispersionswirkung der Düse 68 herabgesetzt, was zugleich die katalytische Reduktionswirkung im Abgasstrom beeinträchtigt. In jedem Fall führt ein unkontrolliertes Wiedereinfließen des Reduktionsmittels 46 nach dem Absaugen desselben aus dem Abgasbehandlungssystem zu unerwünschten Funktionsbeeinträchtigungen.

Die Figur 4 zeigt ein erfindungsgemäßes Ausführungsbeispiel der hier jedoch aus Gründen der besseren zeichnerischen Übersicht nicht im Ganzen dargestellten - Vorrichtung 40, bei der eine Pumpe mit einem automatisch schließenden Ventil als Rückflusssperre zum Einsatz kommt.

Eine Pumpe 100 umfasst unter anderem ein Gehäuseoberteil 102 mit einem Einlass 104 sowie ein Gehäuseunterteil 106 mit einem Auslass 108 für das Reduktionsmittel 46. Die Verbindung der Gehäuseteile 102,106 erfolgt beispielsweise durch eine nicht bezeichnete Flansch- und Bolzenverbindung. Im Gehäuseunterteil 106 befindet sich ein Elektromagnet 110, der einen Magnetkern 112 und eine Zylinderspule 114 umfasst. Der Elektromagnet 110 ist mit einer Trennscheibe 116 bedeckt, die bevorzugt mit einem unmagnetischen Material (Luftspaltwirkung) gebildet ist, um ein magnetisches Verkleben mit der Ankerplatte zu verhindern. Der Magnetkern 112 ist hingegen mit einem magnetischen Material in vorzugsweise geblechter Bauweise zur besseren Führung und Verstärkung des magnetischen Flusses des Elektromagneten 110 ausgebildet. Im Bereich des Gehäuseoberteils 102 befindet sich eine scheibenförmige Ankerplatte 118, die im Wesentlichen parallel zu einer Symmetrieachse bzw. Längsachse 120 der Pumpe 100 aufgrund der magnetischen Kraftwirkung des Elektromagneten 110 verschiebbar ist. Zwischen der Ankerplatte 118 und der Trennscheibe 116, die fest mit dem Magnetkern 112 des Elektromagneten 110 verbunden ist, ist eine umlaufende elastische Dichtmembran 122 zur zumindest teilweisen Begrenzung eines Förderraums 124 und zur Führung der Ankerplatte 118 vorgesehen. Die Dichtmembran 122 kann mit einem beliebigen elastischen Material, das jedoch über eine ausreichende Beständigkeit gegenüber dem Reduktionsmittel 46 verfügen muss, gebildet sein. In Betracht kommt beispielsweise ein Elastomer, wie zum Beispiel Gummi oder eine elastische Membran (Faltenbalg), die mit einer Edelstahllegierung gebildet ist.

In die Trennscheibe 116 und den Magnetkern 112 ist jeweils eine durchgehende Trennscheiben- und Magnetkernbohrung 126,128 eingebracht, wobei ein nicht bezeichneter Durchmesser der Trennscheibenbohrung 126 bevorzugt kleiner als ein Durchmesser der Magnetkernbohrung 128 gewählt ist. Zwischen einem Magnetkemrezess 130 und der Ankerplatte 118 befindet sich eine vorgespannte Druckfeder 132, wobei der Magnetkern 112 im Bereich dieses Rezesses mittels einer elastischen Dichtung, insbesondere einem O-Ring 134 gegenüber dem Gehäuseunterteil 106 abgedichtet ist.

Eine konische Erhöhung 136 der Ankerplatte 118, die auf dieser mittig angeordnet ist, und in die eine durchgehende Ankerplattenbohrung 138 zur Schaffung einer Dichtkante 140 eingebracht ist, wird aufgrund der Kraftwirkung der Druckfeder 132 im stromlosen Zustand des Elektromagneten 110 mit einer definierten Anpresskraft von 1 N bis 10 N, vorzugsweise jedoch mehr als 10 N, gegen einen Anschlag 142 im Bereich des Gehäuseoberteils 102 gedrückt, um im abgestellten Zustand des Verbrennungsmotors einen hermetisch dichten Abschluss des Einlasses 104 im stromlosen Zustand der Pumpe 100 zu erzielen. Der Anschlag 142 ist von einer Ringnut 144 umgeben, insbesondere um der Entstehung von Spannungsrissen im Gehäuseoberteil 102 zu begegnen. Zur Verbesserung der Abdichtungswirkung ist der Anschlag 142 mit einer vorzugsweise kreisförmigen Gummierung 146 versehen. Diese kann beispielsweise durch Anvulkanisieren auf dem Anschlag 142 hergestellt werden. Anstelle der Gummierung 146 kann auch ein beliebiges thermoplastisches, duroplastisches oder duromeres Kunststoffmaterial als Dichtmittel zum Einsatz kommen. Um einen pulsierenden, stoßweisen Pumpbetrieb durch periodisches Bestromen des Elektromagneten 110 mittels der Steuer- und/oder Regeleinrichtung zu erreichen, ist im Bereich der Ankerplattenbohrung 138 ein Einlassventil 148 und im Bereich der Magnetkernbohrung 128 ein Auslassventil 150 vorgesehen.

Der in Figur 4 illustrierte Zustand entspricht fast - da in der gezeigten Stellung der Ankerplatte 118 noch ein nicht bezeichneter schmaler Spalt zwischen der konischen Erhöhung 136 und dem Anschlag 142 besteht - einem Ruhezustand der Pumpe 100, in dem die Ankerplatte 118 bei stromlosem Elektromagneten 110 von der Druckfeder 132 fest gegen das Gehäuseoberteil 102 gepresst wird.

Sowohl das Einlassventil 148 als auch das Auslassventil 150 sind exemplarisch als Klappenventile ausgebildet und werden nicht passiv durch das hindurch strömende Reduktionsmittel 46 bzw. in Abhängigkeit von der Strömungsrichtung geöffnet und geschlossen, sondern können kontrolliert von der bereits erwähnten Steuer- und/oder Regeleinrichtung mittels nicht dargestellter Aktuatoren geöffnet und geschlossen werden. Abweichend von der gezeigten Ausführung des Einlass- und Auslassventils 148,150 als Klappenventile können zum Beispiel auch Kugelventile eingesetzt werden.

Die Fließrichtung, das heißt die normale (Haupt-)Förderrichtung des mittels der Pumpe 100 zu fördernden Reduktionsmittels 46 ist durch die schwarze Pfeillinie 152 angedeutet. Die Ankerplatte 118 legt beim Bestromen des Elektromagneten 110 bzw. beim Stromlosschalten des Elektromagneten 110 infolge der Rückstellwirkung der Druckfeder 132 jeweils einen zur Längsachse 120 parallelen Hubweg 154 zurück, der nach oben durch den Anschlag 142 sowie nach unten durch die Trennscheibe 116 begrenzt ist. Der Magnetkern 112 bzw. die Magnetkernbohrung 128 setzt sich nach unten hin in ein Förderrohr 156 fort, das erforderlichenfalls direkt mit dem zur Abgasreinigung im Abgasstrang des Verbrennungsmotors eingesetzten Katalysator verbunden ist. Das Auslassventil 150 ist zum Beispiel mit einer umlaufenden Schweißnaht mit der Trennscheibe 116 verbunden. Die Dichtkante 140 stellt im Zusammenwirken mit dem gummierten Anschlag 142 und der von der Druckfeder 132 aufgebauten Anpresskraft ein hermetisch dichtschließendes Ventil 158 dar, das bei abgestelltem Verbrennungsmotor ein Ausströmen des Reduktionsmittels 46 aus dem hier nicht dargestellten Vorratstank (vgl. Figur 2) über den Einlass 104 bzw. die nicht vollkommen dicht schließenden Einlass- und Auslassventile 148,150 der Pumpe 100 zuverlässig verhindert.

Zur Vorbereitung der Förderung des Reduktionsmittels 46 - das heißt insbesondere nach einer längeren Stillstandzeit des Verbrennungsmotors und vollständig restentleerter Vorrichtung - wird der Elektromagnet 110 kontrolliert von der Steuer- und/oder Regeleinrichtung unter Strom gesetzt, wodurch sich die Ankerplatte 118 parallel zur Längsachse 120 um den Hubweg 154 nach unten bewegt und an die Trennscheibe 116 anschlägt. Gleichzeitig öffnet die Steuer- und/oder Regeleinrichtung das Einlassventil 148 und schließt das Auslassventil 150, so dass sich der oberhalb der Ankerplatte 118 entstehende Förderraum 124 aufgrund des statischen Drucks zumindest teilweise mit dem Reduktionsmittel 46 füllen kann.

Nach dem Abschalten des Elektromagneten 110 wird die Ankerplatte 118 von der Druckfeder 132 wieder nach oben bis an den Anschlag 142 gedrückt, wobei zugleich das Einlassventil 148 offen gehalten wird, um das Reduktionsmittel 46 in das sich bei diesem Vorgang vergrößernde Volumen des Förderraums 124 einströmen zu lassen. Erreicht die Ankerplatte 118 ihre obere Endlage am Anschlag 142, schließt sich automatisch das Ventil 158 bestehend aus der Dichtkante 140 und dem Anschlag 142 während die Steuer- und/oder Regeleinrichtung das Einlassventil 148 schließt, um bei einer erneuten Abwärtsbewegung der Ankerplatte 118 durch erneutes Bestromen des Elektromagneten 110 das Ansaugen weiteren Reduktionsmittels 46 über den Einlass 152 zu verhindern. Zur Steuerung des Einlass- und des Auslassventils 148,150 können in der Figur 4 nicht dargestellte Lagesensoren vorgesehen sein, die der Steuer- und/oder Regeleinrichtung Signale geben, ob die Ankerplatte 118 sich am Anschlag 142 befindet, kurzzeitig eine Zwischenposition innehat oder fest an der Trennscheibe 116 anliegt.

Um das jetzt im Förderraum 124 befindliche Reduktionsmittel 46 in der Förderrichtung der Pumpe 100 - das heißt parallel zur Pfeillinie 152 - ausstoßen zu können, wird der Elektromagnet 110 erneut unter Strom gesetzt, wobei die Steuer- und/oder Regeleinrichtung das Auslassventil 150 öffnet und das Einlassventil 148 geschlossen hält. Hierdurch wird die im Förderraum 124 befindliche Menge des Reduktionsmittels 46 durch das Förderrohr 156 bzw. den Auslass 108 mit einem Druck von bis zu 10 bar aus der Pumpe 100 heraus gefördert. Dieser Fördervorgang wird während der gesamten Betriebsdauer des Verbrennungsmotors durch periodisches Bestromen bzw. Stromlosschalten des Elektromagneten 110 und die entsprechende Ansteuerung des Einlass- und des Auslassventils 148,150 wiederholt, um das Reduktionsmittel 46 in der (Haupt-)Förderrichtung der Pumpe 100 in jeweils definierten Volumeneinheiten stoßweise vom Einlass 104 zum Auslass 108 der Pumpe 100 zu fördern, und somit die gewünschte, kontinuierliche katalytische Reduktion der Stickoxide im Abgas des Verbrennungsmotors während dessen Betrieb zu bewirken.

Um das in der Vorrichtung enthaltene Reduktionsmittel 46 beim Abstellen des Verbrennungsmotors wieder vollständig bis in den Vorratstank zurücksaugen zu können, das heißt die vollständige Entleerung der Vorrichtung zu erzielen, ist es erforderlich die Pumpe 100 in der so genannten Rücksaugrichtung zu betreiben. Dies bedeutet, dass das Reduktionsmittel 46 entgegen der Richtung der Pfeillinie 152 die Pumpe 100 durchströmt. Zur Erläuterung der Vorgänge beim Rücksaugprozess wird im weiteren Fortgang der Beschreibung davon ausgegangen, dass der Förderraum 124 vollständig mit dem Reduktionsmittel 46 gefüllt ist und sich die Ankerplatte 118 in der in der Figur 4 angedeuteten Position befindet.

Zunächst wird der Elektromagnet 110 bestromt, so dass sich die Ankerplatte 118 ausgehend von ihrer Ruhestellung nach unten auf die Trennscheibe 116 zu bewegt. Zeitgleich werden sowohl das Einlassventil 148 als auch das Auslassventil 150 geöffnet. Infolge der geöffneten Ventile 148,150 kann sich die Ankerplatte 118 ungeachtet des zu diesem Zeitpunkt noch vollständig mit dem Reduktionsmittel 46 gefüllten Förderraums 124 nahezu widerstandsfrei nach unten bewegen, wobei während dieses Vorgangs aufgrund des relativ geringen statischen Drucks in Verbindung mit der Trägheit des Reduktionsmittels 46 im Vorratstank von diesem nur eine vernachlässigbare Menge in die Pumpe 100 nachfließt.

Wird der Elektromagnet 110 erneut stromlos geschaltet, so drückt die Druckfeder 132 die Ankerplatte 118 wieder in ihre obere Ruhestellung, wobei sich das Volumen des Förderraums 124 vergrößert und aufgrund des hierdurch im Förderraum 124 erzeugten Unterdrucks die Reduktionsflüssigkeit 46 vom Auslass 108 über das Förderrohr 156 in den Förderraum 124 eingesaugt wird.
Bei diesem Vorgang bleibt das Auslassventil 150 offen, während das Einlassventil 148 geschlossen ist. Hat die Ankerplatte 118 die Endstellung erreicht, schließt sich das Ventil 158 automatisch. Wird der Elektromagnet 110 erneut bestromt, so wird die im Förderraum 124 aufgenommene Reduktionsflüssigkeit 46 aufgrund der hierdurch erfolgenden Verkleinerung des Volumens des Förderraums 124 in Richtung des Einlasses 104 hinaus gefördert. Hierbei ist umgekehrt das Auslassventil 150 geschlossen, während das Einlassventil 148 offen bleibt.

Die genannten Abläufe werden durch periodisches Bestromen des Elektromagneten 110 und eine entsprechende Ansteuerung des Einlass- und Auslassventils 148,150 mittels der Steuer- und/oder Regeleinrichtung solange wiederholt, bis das Reduktionsmittel 46 vollständig aus der Vorrichtung abgesaugt und in den Vorratstank zurückgeführt ist. Abschließend werden der Elektromagnet 110 sowie das Einlass- und Auslassventil 148,150 von der Steuer- und/oder Regeleinrichtung endgültig abgeschaltet, wobei erfindungsgemäß durch das Ventil 158 die hermetische Abdichtung des Einlasses 104 auch im stromlosen Zustand der Pumpe 100 sichergestellt ist.

Von entscheidender Bedeutung bei der Realisierung dieser Förderrichtungsumkehr der Pumpe 100 (Förderrichtung ⇔ Rücksaugrichtung) ist die individuelle Ansteuerung des Einlassventils 148 und des Auslassventils 150 in Verbindung mit der Bestromung des Elektromagneten 110 zur Bewegung der Ankerplatte 118 mittels entsprechender Signale der Steuer- und/oder Regeleinrichtung. Die Betätigung des Ventils 158, das bei dieser Ausführungsvariante als erfindungsgemäße Rückflusssperre fungiert, erfolgt rein passiv durch die Auf- und Abwärtsbewegung der Ankerplatte 118 mit ihrer konischen Erhöhung 136 in Relation zur Dichtkante 140.

Sämtliche Bauteile der Pumpe 100 die mit dem zu fördernden Reduktionsmittel 46 (s. g. AdBlue® bzw. Harnstoff-Wasser(H2O)-Lösung) in Kontakt kommen, müssen aufgrund der hohen chemischen Aktivität des Reduktionsmittels 46 mit hinreichend korrosionsfesten Materialien, wie zum Beispiel thermoplastischen Kunststoffen, duroplastischen Kunststoffen, Titan- oder Edelstahllegierungen, gefertigt werden. Ferner ist der Gefrierpunkt des Reduktionsmittels 46 zur Sicherstellung der notwendigen Eisdruckfestigkeit zu berücksichtigen. Da oberhalb einer Temperatur von 60 °C die thermische Zersetzung des Reduktionsmittels 46 durch sich verstärkende Kristallisationseffekte eintritt, müssen zudem Vorkehrungen getroffen werden, die einer zu hohen Temperatur des Reduktionsmittels 46 entgegenwirken.

Durch das erfindungsgemäß in die Pumpe 100 integrierte hermetisch dichtschließende Ventil 158 wird auch bei dieser zweiten Ausführungsform, insbesondere während längerer Standzeiten des Verbrennungsmotors, das langsame Volllaufen der Vorrichtung mit dem Reduktionsmittel 46, insbesondere durch die nicht absolut schließenden Einlass- und Auslassventile 148,150, nach dem vorab erfolgenden Zurücksaugen des Reduktionsmittels 46 in den Vorratstank 42, zuverlässig verhindert. Das unmittelbar in die Pumpe 100 als aktive Rückflusssperre integrierte Ventil 158 erlaubt eine kompakte und zugleich kostengünstige Herstellung der Vorrichtung bei einer zugleich gegebenen hohen Einbauvariabilität in das Kraftfahrzeug.

## Patentansprüche

1. Vorrichtung (40) zur Reduktion von Schadstoffen, insbesondere von Stickoxiden, in einem Abgasstrom eines Verbrennungsmotors, mit einem Vorratstank (42) einem darin bereitgehaltenen Reduktionsmittel (46), insbesondere einer Harnstoff-Wasser-Lösung, und einem Dosiermodul, insbesondere eine Düse (68), zum Einsprühen des Reduktionsmittels (46) in den Abgasstrom sowie einer Pumpe (56, 100) zur Förderung des Reduktionsmittels (46) von einer Ansaugstelle (62) im Vorratstank (42) über mindestens eine Leitung (58, 66) bis zum Dosiermodul, wobei die Pumpe (56,100) unterhalb eines Reduktionsmittelspiegels (44) im Vorratstank (42) angeordnet ist und eine Rückflusssperre vorgesehen ist, **dadurch gekennzeichnet, dass** die Rückflusssperre ein in die Pumpe (100) integriertes Ventil (158) ist, und wobei die Pumpe (100) ein Gehäuseoberteil (102) mit einem Einlass (104) und ein Gehäuseunterteil (106) mit einem Auslass (108) für das Reduktionsmittel (46) aufweist, wobei im Gehäuseunterteil (106) ein Elektromagnet (110) mit einem Magnetkern (112) und einer Zylinderspule (114) integriert ist, der mit einer unmagnetischen Trennscheibe (116) bedeckt ist und im Gehäuseoberteil (102) eine im Wesentlichen scheibenförmige und entlang einer Längsachse (120) bewegliche Ankerplatte (118) angeordnet ist.

2. Vorrichtung (40) nach Anspruch 1, wobei zwischen der Ankerplatte (118) und der Trennscheibe (116) eine umlaufende, elastische Dichtmembran (122) zur zumindest teilweisen Begrenzung eines Förderraums (124) vorgesehen ist.

3. Vorrichtung (40) nach einem der vorhergehenden Ansprüche, wobei die Trennscheibe (116) und der Magnetkern (112) jeweils eine durchgehende Trennscheiben- und Magnetkernbohrung (126, 128) aufweisen, die mit dem Auslass (108) für das Reduktionsmittel (46) verbunden sind.

4. Vorrichtung (40) nach einem der vorhergehenden Ansprüche, wobei zwischen einem Magnetkernrezess (130) und der Ankerplatte (118) eine Druckfeder (132) eingespannt ist und der Magnetkern (112) mittels einer Dichtung, insbesondere einem O-Ring (134), gegenüber dem Gehäuseunterteil (106) abgedichtet ist.

5. Vorrichtung (40) nach einem der vorhergehenden Ansprüche, wobei das Ventil (158) mit einer konischen Erhöhung (136) der Ankerplatte (118) gebildet ist, die eine durchgehende Ankerplattenbohrung (138) zur Schaffung einer Dichtkante (140) aufweist, wobei die Dichtkante (140) mittels der Druckfeder (132) im stromlosen Zustand des Elektromagneten (110) mit einer definierten Anpresskraft gegen einen Anschlag (142) im Gehäuseoberteil (102) zur hermetischen Abdichtung des Einlasses (104) pressbar ist.

6. Vorrichtung (40) nach einem der vorhergehenden Ansprüche, wobei im Bereich der Ankerplattenbohrung (138) ein Einlassventil (148) und im Bereich einer Magnetkernbohrung (128) ein Auslassventil (150) vorgesehen ist, die jeweils unabhängig voneinander mittels einer Steuer- und/oder Regeleinrichtung elektrisch betätigbar sind und sich die Magnetkernbohrung (128) in ein Förderrohr (156) am Auslass (108) fortsetzt.

## Claims

1. Device (40) for reducing pollutants, in particular nitrogen oxides, in the exhaust gas stream of an internal combustion engine, having a storage tank (42), reducing agent (46) held ready therein, in particular a urea/water solution, storage tank (42) and a feed module, in particular a nozzle (68), for injecting the reducing agent (46) into the exhaust gas stream as well as a pump (56, 100) for delivering the reducing agent (46) from an intake point (62) in the storage tank (42) via at least one line (58, 66) to the feed module, wherein the pump (56, 100) is arranged below the reducing agent level (44) in the storage tank (42) and a backflow barrier is provided, **characterized in that** the backflow barrier is a valve (158) incorporated into the pump (100), and wherein the pump (100) comprises a housing top (102) with an inlet (104) and a housing bottom (106) with an outlet (108) for the reducing agent (46), wherein an electromagnet (110) with a magnetic core (112) and a cylindrical coil (114) is incorporated in the housing bottom (106), which electromagnet is covered with a nonmagnetic isolating disc (116), and a substantially disc-shaped armature plate (118) movable along a longitudinal axis (120) is arranged in the housing top (102).

2. Device (40) according to Claim 1, wherein a peripheral, resilient sealing membrane (122) is provided between the armature plate (118) and the isolating disc (116) to define at least in part a delivery chamber (124).

3. Device (40) according to one of the preceding claims, wherein the isolating disc (116) and the magnetic core (112) each comprise a continuous isolating disc and magnetic core bore (126, 128), which are connected to the outlet (108) for the reducing agent (46).

4. Device (40) according to one of the preceding claims, wherein a compression spring (132) is clamped between a magnetic core recess (130) and the armature plate (118) and the magnetic core (112) is sealed by means of a seal, in particular an O-ring (134), relative to the housing bottom (106).

5. Device (40) according to one of the preceding claims, wherein the valve (158) is formed by a conical raised portion (136) of the armature plate (118), which comprises a continuous armature plate bore (138) to create a sealing edge (140), wherein the sealing edge (140) may be pressed by means of the compression spring (132), when the electromagnet (110) is in the deenergized state, with a defined contact pressure against a limit stop (142) in the housing top (102), to seal the inlet (104) hermetically.

6. Device (40) according to one of the preceding claims, wherein an inlet valve (148) is provided in the region of the armature plate bore (138) and an outlet valve (150) is provided in the region of a magnetic core bore (128), these each being electrically actuatable independently of one another by means of an open- and/or closed-loop control unit and the magnetic core bore (128) continuing into a delivery pipe (156) at the outlet (108).

## Revendications

1. Dispositif (40) de réduction de substances polluantes, en particulier d'oxydes d'azote, dans un flux de gaz d'échappement d'un moteur à combustion interne, comprenant un réservoir de stockage (42), un agent réducteur (46) tenu à disposition dans celui-ci, en particulier une solution d'urée et d'eau, et un module de dosage, en particulier une buse (68), pour injecter l'agent réducteur (46) dans le flux de gaz d'échappement, ainsi qu'une pompe (56, 100) pour refouler l'agent réducteur (46) à partir d'un point d'aspiration (62) dans le réservoir de stockage (42) par le biais d'au moins une conduite (58, 66) jusqu'au module de dosage, la pompe (56, 100) étant disposée en dessous d'un niveau d'agent réducteur (44) dans le réservoir de stockage (42) et un dispositif anti-retour étant prévu, **caractérisé en ce que** le dispositif anti-retour est une soupape (158) intégrée dans la pompe (100), et la pompe (100) comprenant une partie supérieure de boîtier (102) pourvue d'une entrée (104) et une partie inférieure de boîtier (106) pourvue d'une sortie (108) pour l'agent réducteur (46), un électroaimant (110) comprenant un noyau magnétique (112) et une bobine cylindrique (114) étant intégré dans la partie inférieure de boîtier (106), lequel électroaimant est recouvert par un disque de séparation non magnétique (116), et une plaque d'armature (118) essentiellement en forme de disque et mobile le long d'un axe longitudinal (120) étant disposée dans la partie supérieure de boîtier (102).

2. Dispositif (40) selon la revendication 1, dans lequel une membrane d'étanchéité élastique périphérique (122) est prévue entre la plaque d'armature (118) et le disque de séparation (116) pour limiter au moins partiellement un espace de refoulement (124).

3. Dispositif (40) selon l'une quelconque des revendications précédentes, dans lequel le disque de séparation (116) et le noyau magnétique (112) présentent respectivement un alésage de disque de séparation et un alésage de noyau magnétique traversants (126, 128) qui sont reliés à la sortie (108) pour l'agent réducteur (46).

4. Dispositif (40) selon l'une quelconque des revendications précédentes, dans lequel un ressort de compression (132) est inséré entre un évidement de noyau magnétique (130) et la plaque d'armature (118), et le noyau magnétique (112) est étanchéifié vis-à-vis de la partie inférieure de boîtier (106) au moyen d'un joint d'étanchéité, en particulier d'un joint torique (134).

5. Dispositif (40) selon l'une quelconque des revendications précédentes, dans lequel la soupape (158) est formée par une partie conique en relief (136) de la plaque d'armature (118), laquelle comprend un alésage traversant de plaque d'armature (138) pour réaliser une arête d'étanchéité (140), dans lequel l'arête d'étanchéité (140) peut être pressée, au moyen du ressort de compression (132), lorsque l'électroaimant (110) est à l'état non alimenté en courant, avec une force de pression définie contre une butée (142) dans la partie supérieure de boîtier (102) pour fermer hermétiquement l'entrée (104).

6. Dispositif (40) selon l'une quelconque des revendications précédentes, dans lequel une soupape d'entrée (148) est prévue dans la région de l'alésage de plaque d'armature (138) et une soupape de sortie (150) est prévue dans la région d'un alésage de noyau magnétique (128), lesquelles soupapes peuvent être actionnées électriquement indépendamment l'une de l'autre au moyen d'un dispositif de commande et/ou de régulation, et l'alésage de noyau magnétique (128) se prolonge par un tube de refoulement (156) au niveau de la sortie (108).
